(19) Europäisches Patentamt
European Patent Office
Office européen des brevets

(11) Veröffentlichungsnummer: **0 358 021**
**A2**

(12) # EUROPÄISCHE PATENTANMELDUNG

(21) Anmeldenummer: 89115326.4

(22) Anmeldetag: 19.08.89

(51) Int. Cl.$^5$: C08G 18/38 , C08G 18/65 , C08G 18/40 , C08G 18/63 , C08K 5/16 , C08K 5/20 , C08K 5/21 , C08J 9/00 , //(C08G18/38,101:00)

(30) Priorität: 03.09.88 DE 3829958

(43) Veröffentlichungstag der Anmeldung: 14.03.90 Patentblatt 90/11

(84) Benannte Vertragsstaaten: AT BE CH DE ES FR GB IT LI NL SE

(71) Anmelder: BAYER AG
D-5090 Leverkusen 1 Bayerwerk(DE)

(72) Erfinder: Haas, Peter, Dr.
Zwengenberger Strasse 43
D-56 57 Haan 1(DE)
Erfinder: Hettel, Hans, Dr.
Jägerstrasse 20
D-5064 Rösrath-Forsbach(DE)
Erfinder: Ruckes, Andreas, Dr.
Herderstrasse 13
D-5090 Leverkusen 3(DE)

(54) **Verfahren zur Herstellung von Polyurethanschaumstoffen.**

(57) Polyurethanschaumstoffe werden durch Umsetzung von 1) Polyisocyanaten mit 2) mindestens zwei gegenüber Isocyanaten aktive Wasserstoffatome aufweisenden Verbindungen vom Molekulargewicht 400 bis 10.000, welche polymermodifizierte Polyole und/oder Polyole mit überwiegend primären Hydroxylgruppen darstellen, in Gegenwart von 3) Wasser und/oder organischen Treibmitteln und 4) Katalysatoren und 5) Verbindungen der allgemeinen Formel I

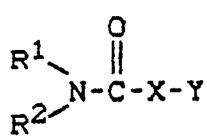

I

in welcher
$R^1$ und $R^2$ gleich oder verschieden sind und Wasserstoff und/oder einen $C_1$-$C_4$-Alkylrest
X eine Alkylengruppe-$(CH_2)_n$- mit n = 0 bis 5, bevorzugt n = 0 und 1, -CH=CH- oder einen verzweigten Alkylenrest, eine Arylengruppe oder $(NH)_m$ mit m = 1 oder 2

Y =

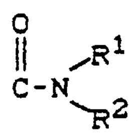

mit den bereits genannten Bedeutungen von $R^1$ und $R^2$ oder -CN
bedeutet,
als Flammschutzmittel und gegebenenfalls in Gegenwart von 6) Verbindungen mit mindestens zwei gegenüber Isocyanaten reaktionsfähigen Wasserstoffatomen und einem Molekulargewicht von 32 bis 399

EP 0 358 021 A2

sowie 7) an sich bekannten oberflächenaktiven Hilfsmitteln hergestellt.

## Verfahren zur Herstellung von Polyurethanschaumstoffen

Seit langem wird versucht, Polyurethanschaumstoffe flammwidriger einzustellen. Dieses Thema wird auch deshalb ständig bearbeitet, weil die Anforderungen bezüglich einer Entflammbarkeit laufend angehoben werden.

So fand in jüngster Zeit die britische Prüfnorm BS 5852, Part 2, z.B. in der Ausführung des Crib 5-Testes besondere Beachtung.

Dieser Test stellt an die Schaumstoffe besonders strenge Forderungen bezüglich ihrer Entzündungsresistenz. In jüngster Zeit wird zudem versucht, die Verwendung von Phosphorsäureestern bzw. Halogenalkylphosphorsäureestern als Flammschutzmittel einzuschränken.

Ein weiterer Weg wurde durch die Verwendung von Melamin als Flammschutzmittel beschritten. In diesem Zusammenhang seien die DE-OS 2 809 084, GB-PS 2 177 406, DE-OS-2 815 554, DE-OS 3 530 519 sowie GB-PS 2 094 315 erwähnt, wobei Melamin relativ hart macht. In diesem Zusammenhang ist ein starker Stauchhärteanstieg im Schaumstoff zu beobachten.

Die DE-OS 2 533 180 befaßt sich mit der Herstellung von flammhemmenden Latex- oder Polyurethanschaumstoffen durch Aluminiumoxidhydrat, weiteren Bauxitmineralien und Oxamid.

In konventionellen Polyurethanschaumstoffen zeigt nun Oxamid selbst keine Flammschutzwirkung.

Ein selbstverlöschender Effekt kann dieser Substanz also nicht zugeordnet werden.

Setzt man diese Verbindung hingegen in hochelastischen (HR)-Schaumstoffen ein, so stellt man eine überraschend gute Flammschutzwirkung fest.

Bei Kettenvergrößerung dieser Struktureinheit erhält man sogar einen hervorragenden Flammschutz sowohl in Standardschaumstoffen als auch in hochelastischem (HR)-Schaumstoffsystemen.

Gegenstand der Erfindung ist ein Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Verbindun gen vom Molekulargewicht 400 bis 10.000 in Gegenwart von 3) Wasser und/oder organischen Treibmitteln und 4) Katalysatoren und 5) Flammschutzmitteln und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als

Flammschutzmittel 5) Verbindungen der allgemeinen Formel I

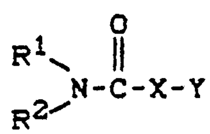

I

in welcher

$R^1$ und $R^2$ gleich oder verschieden sind und Wasserstoff und/oder einen $C_1$-$C_4$-Alkylrest

X eine Alkylengruppe-$(CH_2)_n$- mit n = 0 bis 5, bevorzugt n = 0 und 1, -CH=CH- oder einen verzweigten Alkylenrest, eine Arylengruppe oder $(NH)_m$ mit m = 1 oder 2

Y = 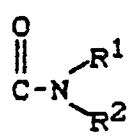

mit den bereits genannten Bedeutungen von $R^1$ und $R^2$ oder -CN bedeutet

und als Komponente 2) polymermodifizierte Polypolyole und/oder Polyole mit überwiegend primären Hydroxylgruppen verwendet werden.

Bevorzugte Ausführungsformen des erfindungsgemäßen Verfahrens sind, daß

- als polymermodifizierte Polyole Polyharnstoffdispersionen in Polyethern verwendet werden,
- als polymermodifizierte Polyole Alkanolaminaddukte von Diisocyanaten in Polyolen verwendet werden,
- als polymermodifizierte Polyole gepfropfte Polyether, die durch Polymerisation von Acrylnitril und/oder Styrol in Polyethern erhalten wurden,
- als Flammschutzmittel 5) die Verbindungen

$NH_2-\overset{O}{\overset{\|}{C}}-CH_2-\overset{O}{\overset{\|}{C}}-NH_2$ $NH_2-\overset{O}{\overset{\|}{C}}-CH_2-CN$

$NH_2-\overset{O}{\overset{\|}{C}}-\overset{O}{\overset{\|}{C}}-NH_2$

und

$NH_2-CO-NH-NH-CO-NH_2$

$NH_2-\overset{O}{\overset{\|}{C}}-NH-\overset{O}{\overset{\|}{C}}-NH_2$

verwendet werden, und daß

- weitere Flammschutzmittel mitverwendet werden.

Für die Herstellung der Polyurethanschaumstoffe werden als Ausgangskomponenten eingesetzt:

1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$Q(NCO)_n$

in der

n = 2 - 4, vorzugsweise 2,

und

Q einen aliphatischen Kohlenwasserstoffrest mit 2 -18, vorzugsweise 6 -10 C-Atomen,
einen cycloaliphatischen Kohlenwasserstoffrest mit 4 -15, vorzugsweise 5 - 10 C-Atomen,
einen aromatischen Kohlenwasserstoffrest mit 6 -15, vorzugsweise 6 - 13 C-Atomen,
oder einen araliphatischen Kohelnwasserstoffrest mit 8 -15, vorzugsweise 8 - 13 C-Atomen,
bedeuten, z.B. solche Polyisocyanate, wie sie in der DE-OS 2 832 253, Seiten 10 - 11, beschrieben werden.
Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4′-und/oder 2,4′-Diphenylmethandiisocyanat ableiten.

2. Ausgangskomponenten sind a) ferner die an sich bekannten "polymermodifizierten" Polyole. Bevorzugt sind Dispersionen von Polymeren enthaltenden höhermolekularen Hydroxylverbindungen, die durch Umsetzung von Mono- und/ oder Polyisocyanaten mit primäre und/oder sekundäre Aminogruppen aufweisenden Polyaminen und/oder Hydrazinen und/oder Hydraziden und/oder Alkanolaminen in einer 1 bis 8 primäre und/oder sekundäre Hydroxylgruppen aufwei senden Verbindung mit einem Molekulargewicht von 400 bis 10,000 hergestellt worden sind.
Derartige Dispersionen von Polymeren enthaltenden höhermolekularen Hydroxylverbindungen sind z. B. aus DE-AS 25 19 004, DE-OS 25 50 796, DE-OS 25 50 797, DE-OS 25 50 860, DE-OS 25 50 833, DE-OS 25 50 862, DE-OS 26 38 759, DE-OS 26 39 254, US-PS 43 74 209, EP-A 00 79 115 und US-PS 4 381 351 bekannt.
In Frage kommen ferner Dispersionen von Reaktionsprodukten von Polyisocyanaten und Alkanolaminen in Polyethern (vgl. z.B. DE-OS 3 103 757) und Dispersionen von Homo- oder Copolymerisaten von ungesättigten Monomeren wie Styrol oder Acrylnitril in Polyethern (sog. "Polymer-Polyole").
b) Die alleinige Verwendung von "aktiven" höhermolekularen Hydroxylverbindungen, d.h. von solchen, die überwiegend primäre OH-Gruppen aufweisen und die keine dispergierten höhermolekularen Anteile enthalten, ist grundsätzlich erfindungsgemäß auch möglich. Derartige aktive Polyole sind an sich bekannt.

3. Als Treibmittel werden Wasser (bevorzugt) und/ oder leicht flüchtige organische Substanzen verwendet.

4. Erfindungsgemäß werden die aus der Polyurethanchemie an sich bekannten Katalysatoren wie tert.-Amine und/oder metallorganische Verbindungen eingesetzt.

5. Als Flammschutzmittel werden die oben genannten Verbindungen der allg. Formel I verwendet.
Als im Sinne der vorliegenden Erfindung geeignete Verbindungen seien aufgeführt:

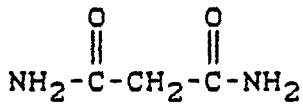 (besonders bevorzugt)

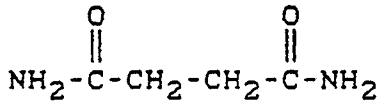

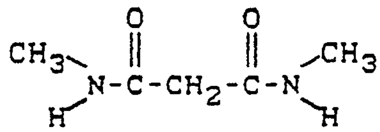

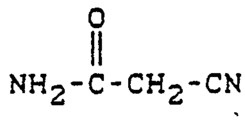 (besonders bevorzugt)

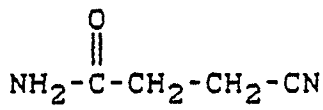

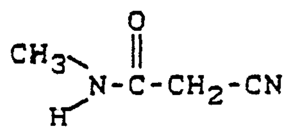

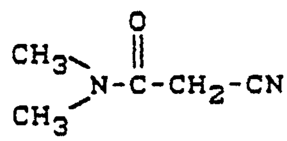

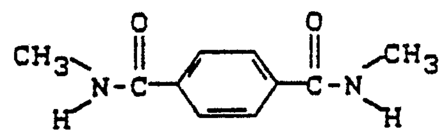

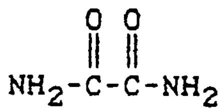 (besonders bevorzugt)

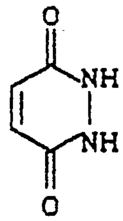

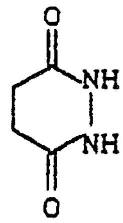

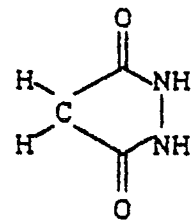

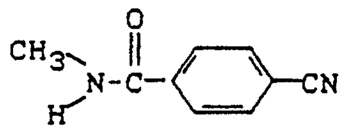

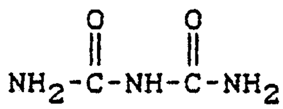

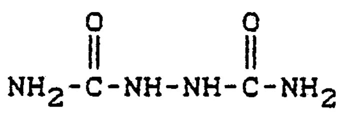 (besonders bevorzugt)

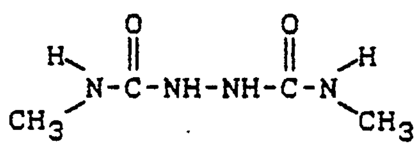

Weitere Flammchutzmittel können mitverwendet werden, z.B. Aluminiumoxide, Aluminiumoxidhydrate, Melamin, Melaminderivate, Melaminsalze, Cyanamid und Dicyandiamid oder Tris-chlorethylphosphat.

6. Ausgangskomponenten sind ferner gegebenenfalls Verbindungen mit mindestens zwei gegenüber Isocyanaten reaktionsfähigen Wasserstoffatomen mit einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 -20, beschrieben.

7. Gegebenenfalls mitzuverwenden sind auch oberflächenaktive Zusatzstoffe, wie Emulgatoren und Schaumstabilisatoren. Als Emulgatoren sind solche auf Basis alkoxilierter Fettsäuren und höherer Alkohole bevorzugt.

Als Schaumstabilisatoren kommen vor allem Polyethersiloxane, speziell wasserunlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Wasserlösliche Schaumstabilisatoren sind z.B. in den US-PS 2 834 748, 2 917 480 und 3 629 308 beschrieben; sie sind zur Herstellung von hochelastischen (HR) Schaumstoffen jedoch nicht so geeignet.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch

wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966. z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Ver arbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schaumfähige Reaktionsgemisch auf und bildet den Formkörper. die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "over-charging" gearbeitet; eine derartige Verfahrensweise ist z.B. aus den US-PS 3 178 490 und 3 182 104 bekannt.

Bei der Formverschäumung werden vielfach an sich bekannte "außere Trennmittel," wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind. Selbstverständlich können aber auch Schaumstoffe durch Blockverschäumung oder nach dem an sich bekannten Doppeltransportbandverfahren hergestellt werden.

Die Entzündungsversuche unter den starken Anforderungen des Crib 5-Testes nach BS 5852, Part 2, zeigen, daß die erfindungsgemäßen Verbindungen als Flammschutzmittel hervorragend geeignet sind. Vorteilhaft sind auch die mechanischen Eigenschaften der resultierenden Schaumstoffe.

Auffällig ist, daß die Härte wenig beeinflußt wird.

Die flammwidrigen Polyurethanschaumstoffe werden zur Konfektionierung von Möbeln und zur Herstellung von Matratzen mit erhöhten Flammschutznormen und Sicherheitsbestimmungen, z.B. gemäß BS 5852, Part 2 und den dort aufgeführten Entzündungsquellen, verwendet.

Anwendung finden diese flammwidrigen Schaumstoffe zur Ausrüstung von Sitzmöbeln in Theatern, Kinos, im Privatbereich und Gaststätten sowie zur Ausrüstung von Liegemöbeln.

Die Schaumstoffe können nach verschiedenen Verfahren der Blockschaumstoffherstellung oder aber in Formen hergestellt werden.

## Ausführungsbeispiele

A)

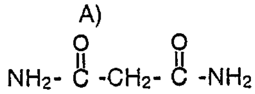 $C_3H_6N_2O_2$

Zu 1.320 g (10 Mol) Malonsäuredimethylester in 500 ml Methanol wird bei RT Ammoniak eingeleitet, wobei die Temperatur auf 30° gehalten wird. Das Kristallisat wird abgesaugt, mit Methanol gewaschen und getrocknet.

Ausbeute 960 g Fp. 174° C

B)

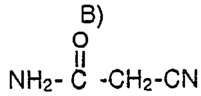 $C_3H_4N_2O$

Zu 990 g (10 Mol) Cyanessigsäuremethylester werden 1.500 g konz. Ammoniakwasser getropft, so daß 35° C nicht überschritten werden. Es wird für 30 Min. bei dieser Temperatur nachgerührt, auf 0° C abgekühlt, abgesaugt und aus Ethanol umkristallisiert.

Ausbeute 600 g Fp. 117-120° C

C)

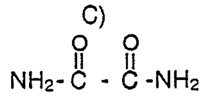 $C_2N_2N_2O_2$

1460 g (10 Mol) Oxalsäurediethylester werden in 2000 g konzentriertes Ammoniakwasser eingetragen, wobei die Temperatur langsam bis auf 40 °C ansteigt. Man rührt 30 Minuten nach saugt ab, wäscht gründlich mit Wasser sowie abschließend mit Ethanol nach und trocknet. Die Säurezahl soll unter 3 liegen.
Ausbeute 850 g

In der für die Herstellung von Polyurethanschaumstoffen üblichen Verarbeitungstechnik werden zur Reaktion gebracht:

## Beispiel 1

| | | |
|---|---|---|
| 100 | Tle. | einer Polyharnstoffdispersion auf Basis eines aktiven Polyetherpolyols aus Trimethylolpropan, Propylenoxid und Ethylenoxid sowie eines Diamins und Toluylendiisocyanat der OH-Zahl 32 |
| 30 | Tle. | Malonsäurediamid gemäß A) |
| 3,0 | Tle. | Wasser |
| 1,0 | Tle. | Diethanolamin |
| 0,6 | Tle. | Aminvernetzer auf der Basis eines höheren Alkanolamins (Vernetzer PU 3229, Bayer AG) |
| 0,1 | Tle. | Aminaktivator Dabco® 33LV (Houdry/Hüls) (33 %ige Lösung von Triethylendiamin in Dipropylenglykol) |
| 0,05 | Tle. | Aminaktivator A1 (UCC) (Bis-(2-dimethylaminoethyl)-ether |
| 0,25 | Tle. | Stabilisator auf der Basis eines kurzkettig polyethermodifizierten Silicons (Stabilisator AC3367, Bayer AG) |
| 2,0 | Tle. | Tris-(2-chlorethyl)-phosphat |
| 0,15 | Tle. | Zinnoctoat |

| | | |
|---|---|---|
| 40,6 | Tle. | TDI 80 (Gemisch von 80 Gew.-% 2,4-Toluylendiisocyanat und 20 Gew.-% 2,6-Toluylendiisocyanat) |

| Schaumstoffeigenschaften: | |
|---|---|
| Rohdichte: | 36,5 kg $m^{-3}$ |
| Zugfestigkeit: | 100 kPa |
| Bruchdehnung: | 100 % |
| Stauchhärte 40%: | 3,0 kPa |
| Druckverf.-Rest 90%: | 8,2 % |

Die Flammwidrigkeit wird nach BS 5852, Part 2, Crib 5 geprüft. Überzug: PE-Textil der Firma Lister (GB) 220 g/$m^2$

| | |
|---|---|
| Gesamtgewicht: | 1.069 g (Schaumstoff mit Krippe und Textil) |
| Brandzeit: | 205 sec. |
| Masseverlust: | 19 g |

Höhe des intakten Restschaumes unter der Krippe: 2,5 cm Ein Durchtropfen erfolgte nicht.

| Prüfung ohne Textil | |
|---|---|
| Gesamtgewicht: | 931 g (Schaumstoff mit Krippe) |
| Brandzeit: | 160 sec. |
| Masseverlust: | 21 g |

Höhe des intakten Restschaumes unter der Krippe: 1,0 cm.

Ein konventioneller Schaumstoff gleicher Rohdichte und gleicher Menge an Malondiamid zeigt ebenfalls flammhemmende Eigenschaften. Auch dieser Schaumstoff ist selbstverlöschend.

| Beispiel 2 | |
|---|---|
| 100 Tle. | einer Polyharnstoffdispersion gemäß Beispiel 1 |
| 30 Tle. | Cyannessigsäureamid gemäß B) |
| 3,0 Tle. | Wasser |
| 2,0 Tle. | Diethanolamin |
| 0,6 Tle. | Aminvernetzer gemäß Beispiel 1 |
| 0,1 Tle. | Aktivator Dabco® 33LV gemäß Beispiel 1 |
| 0,05 Tle. | Aktivator A1 gemäß Beispiel 1 |
| 0,25 Tle. | Stabilisator gemäß Beispiel 1 |
| 0,1 Tle. | Zinnoctoat |
| 40,6 Tle. | Polyisocyanat gemäß Beispiel 1 |

| Schaumstoffeigenschaften | |
|---|---|
| Rohdichte: | 37,4 kg/m³ |
| Zugfestigkeit: | 97 KPa |
| Bruchdehnung: | 97 % |
| Stauchhärte: | 4,4 KPa |
| Druckverformungsrest 90%: | 8,0 % |

Die Flammwirdrigkeit wird nach BS 5852, Part 2, Crib 5 geprüft. Überzug: PE-Textil der Firma Lister (GB) 220 $g/m^2$

| | |
|---|---|
| Gesamtgewicht: | 1328 g (Schaum, Textil, Krippe, Halterung) |
| Brandzeit: | 180 sec |
| Masseverlust: | 23 g |

Höhe des intakten Restschaumes unter der Krippe: 1 cm

| Beispiel 3 | |
|---|---|
| 100 Tle. | einer Polyharnstoffdispersion gemäß Beispiel 1 |
| 20 Tle. | Cyannessigsäureamid gemäß B) |
| 3,0 Tle. | Wasser |
| 2,0 Tle. | Diethanolamin |
| 0,6 Tle. | Aminvernetzer gemäß Beispiel 1 |
| 0,1 Tle. | Aktivator Dabco® 33LV gemäß Beispiel 1 |
| 0,05 Tle. | Aktivator A1 gemäß Beispiel 1 |
| 0,25 Tle. | Stabilisator gemäß Beispiel 1 |
| 0,1 Tle. | Zinnoctoat |
| 40,6 Tle. | Polyisocyanat gemäß Beispiel 1 Gemisch aus 80 Gew.-% 2,4-Toluylendiisocyanat und 20 Gew.-% 2,6-Toluylendiisocyanat |

| Schaumstoffeigenschaften | |
|---|---|
| Rohdichte: | 40,7 kg/m³ |
| Zugfestigkeit: | 97 KPa |
| Bruchdehnung: | 91 % |
| Stauchhärte: | 4,8 KPa |
| Druckverformungsrest 90%: | 8,0 % |

Die Flammwidrigkeit wird nach BS 5852, Part 2, Crib 5 geprüft. Überzug: PE-Textil der Firma Lister

(GB) 220 g/m²

| | |
|---|---|
| Gesamtgewicht: | 1405 g (Schaumstoff, Krippe, Listertextil, Halterung) |
| Brandzeit: | 184 sec |
| Masseverlust: | 27 g |

| Beispiel 4 | |
|---|---|
| 100 Tle. | einer Polyharnstoffdispersion gemäß Beispiel 1 |
| 30 Tle. | Hydrazodicarbonamid |
| 3,0 Tle. | Wasser |
| 1,0 Tle. | Diethanolamin |
| 0,6 Tle. | Aminvernetzer gemäß Beispiel 1 |
| 0,25 Tle. | Aktivator Dabco® 33LV gemäß Beispiel 1 |
| 0,05 Tle. | Aktivator A1 gemäß Beispiel 1 |
| 0,25 Tle. | Stabilisator gemäß Beispiel 1 |
| 0,15 Tle. | Zinnoctoat |
| 2,0 Tle. | Tris-(2-chlorethyl)-phosphat |
| 40,6 Tle. | Polyisocyanat gemäß Beispiel 1 |

| Schaumstoffeigenschaften: | |
|---|---|
| Rohdichte: | 34,9 kg/m³ |
| Zugfestigkeit: | 63 KPa |
| Bruchdehnung: | 73 % |
| Stauchhärte: | 3,3 KPa |
| Druckverformungsrest 90%: | 6,2 % |

Die Flammwidrigkeit wird nach BS 5852, Part 2, Crib 5 geprüft. Überzug: PE-Textil der Firma Lister (GB) 220 g/m².

| | |
|---|---|
| Gesamtgewicht: | 1366 g (Schaumstoff, Textil, Krippe, Halteklammern) |
| Brandzeit: | 170 sec |
| Masseverlust: | 31 g |

Höhe des intakten Schaumes unter der Krippe: 15 mm

| Beispiel 5 | |
|---|---|
| 100 Tle. | einer Polyharnstoffdispersion gemäß Beispiel 1 |
| 20 Tle. | Hydrazodicarbonamid |
| 3,0 Tle. | Wasser |
| 1,0 Tle. | Diethanolamin |
| 0,6 Tle. | Aminvernetzer gemäß Beispiel 1 |
| 0,25 Tle. | Aktivator Dabco® 33LV gemäß Beispiel 1 |
| 0,05 Tle. | Aktivator A1 gemäß Beispiel 1 |
| 0,25 Tle. | Stabilisator gemäß Beispiel 1 |
| 0,15 Tle. | Zinnoctoat |
| 2,0 Tle. | Tris-(2-chlorethyl)-phosphat |
| 40,6 Tle. | Polyisocyanat gemäß Beispiel 1 |

| Schaumstoffeigenschaften: | |
|---|---|
| Rohdichte: | 33,0 $kg/m^3$ |
| Zugfestigkeit: | 84 KPa |
| Bruchdehnung: | 98 % |
| Stauchhärte: | 3,3 KPa |
| Druckverformungsrest 90%: | 5,3 % |

Flammwidrigkeit nach BS 5852, Part 2, Crib 5. Überzug: PE-Textil der Firma Lister (GB) 220 $g/m^2$

| | |
|---|---|
| Gesamtgewicht: | 1320 g (Schaumstoff,Krippe, Textil, Haltekammern) |
| Brandzeit: | 135 sec |
| Masseverlust: | 24 g |

Höhe des intakten Schaumes unter der Krippe 5 mm.

| Beispiel 6 | |
|---|---|
| 100 Tle. | einer Polyharnstoffdispersion gemäß Beispiel 1 |
| 3,0 Tle. | Wasser |
| 10 Tle. | Hydrazodicarbonamid |
| 1,0 Tle. | Diethanolamin |
| 0,6 Tle. | Aminvernetzer gemäß Beispiel 1 |
| 0,15 Tle. | Aktivator Dabco® 33LV gemäß Beispiel 1 |
| 0,25 Tle. | Stabilisator gemäß Beispiel 1 |
| 0,15 Tle. | Zinnoctoat |
| 2,0 Tle. | Tris-(2-chlorethyl)phosphat |
| 40,6 Tle. | Polyisocyanat gemäß Beispiel 1 |

**Schaumstoffeigenschaften:**

| | |
|---|---|
| Rohdichte: | 31,2 kg/m³ |
| Zugfestigkeit: | 79 KPa |
| Bruchdehnung: | 93 % |
| Stauchhärte: | 3,1 KPa |
| Druckverformungsrest 90 %: | 4,7 % |

Flammwidrigkeit nach BS 5852, Part 2, Crib 5 Überzug: PE-Textil der Firma Lister (GB) 220 $g/m^2$

| | |
|---|---|
| Gesamtgewicht: | 1245 g (Schaumstoff, Textil, Krippe, Halterung) |
| Brandzeit: | 340 sec |
| Masseverlust: | 38 g |

| Beispiel 7 | |
|---|---|
| 100 Tle. | einer Polyharnstoffdispersion gemäß Beispiel 1 |
| 3,0 Tle. | Wasser |
| 30 Tle. | Oxamid gemäß C) |
| 0,6 Tle. | Aminvernetzer gemäß Beispiel 1 |
| 0,1 Tle. | Aktivator Dabco® 33LV gemäß Beispiel 1 |
| 0,15 Tle. | Aktivator A1 gemäß Beispiel 1 |
| 0,25 Tle. | Stabilisator gemäß Beispiel 1 |
| 0,1 Tle. | Zinnoctoat |
| 2,0 Tle. | Tris-(2-chlorethyl)-phosphat |
| 40,6 Tle. | Polyisocyanat gemäß Beispiel 1 |

| Schaumstoffeigenschaften | |
|---|---|
| Rohdichte: | 36,1 $kg/m^3$ |
| Zugfestigkeit: | 80 KPa |
| Bruchdehnung: | 90 % |
| Stauchhärte: | 4,0 KPa |
| Druckverformungsrest 90%: | 7,0 % |

Flammwidrigkeit nach BS 5852, Part 2, Crib 5 Überzug: PE-Textil der Firma Lister (GB) 220 $g/m^2$

| | |
|---|---|
| Gesamtgewicht: | 1245 g (Schaumstoff, Textil, Krippe, Halterung) |
| Brandzeit: | 250 sec |
| Masseverlust: | 34 g |

Ein konventioneller Schaumstoff gleicher Rohdichte und gleicher Menge an Oxamid zeigt keine flammhemmenden Eigenschaften.

Die erfindungsgemäßen Verbindungen der allgemeinen Formel I können selbstverständlich in Form ihrer Gemische oder als Gemisch mit bekannten Flammschutz mitteln, wie z.B. Halogene enthaltende Phosphorsäureester oder Stickstoff enthaltende Flammschutzkomponenten wie Melamin und Melaminsalze wie Melaminoxalat, Melaminborat, Melamincyanurat verwendet werden.

**Ansprüche**

1. Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Verbindungen vom Molekulargewicht 400 bis 10.000 in Gegenwart von 3) Wasser und/oder organischen Treibmitteln und 4) Katalysatoren und 5) Flammschutzmitteln und gegebenenfalls in Gegenwart von 6) Verbindungen mit mindestens zwei gegenüber Isocyanaten reaktionsfähigen Wasserstoffatomen und einem Molekulargewicht von 32 bis 399 sowie 7) an sich bekannten oberflächenaktiven Zusatzstoffen und weiteren, an sich bekannten Hilfsmitteln, dadurch gekennzeichnet, daß als
Flammschutzmittel 5) Verbindungen der allgemeinen Formel I

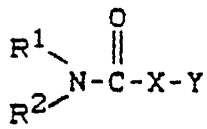

I

in welcher
$R^1$ und $R^2$ gleich oder verschieden sind und Wasserstoff und/oder einen $C_1$-$C_4$-Alkylrest
X eine Alkylengruppe-$(CH_2)_n$- mit n = 0 bis 5, bevorzugt n = 0 und 1, -CH=CH- oder einen verzweigten Alkylenrest, eine Arylengruppe oder $(NH)_m$ mit m = 1 oder 2

Y =

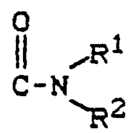

mit den bereits genannten Bedeutungen von $R^1$ und $R^2$ oder -CN
bedeutet
und als Komponente 2) polymermodifizierte Polyole und/oder Polyole mit überwiegend primären Hydroxylgruppen verwendet werden.

2. Verfahren nach Anspruch 1) dadurch gekennzeichnet, daß als polymermodifizierte Polyole Polyharnstoffdispersionen in Polyethern verwendet werden.

3. Verfahren nach Anspruch 1 dadurch gekennzeichnet, daß als polymermodifizierte Polyole Alkanolaminaddukte von Diisocyanaten in Polyethern verwendet werden.

4. Verfahren nach Anspruch 1 dadurch gekennzeichnet, daß als polymermodifizierte Polyoler gepfropfte Polyether, die durch Polymerisation von Acrylnitril und/oder Styrol in den Polyethern enthalten wurden, verwendet werden.

5. Verfahren nach Anspruch 1 bis 4 dadurch gekennzeichnet, daß als Flammschutzmittel 5)

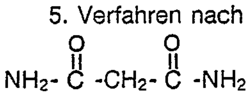

verwendet wird.

6. Verfahren nach Anspruch 1 bis 4 dadurch gekennzeichnet, daß als Flammschutzmittel 5)

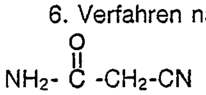

verwendet wird.

7) Verfahren gemäß Anspruch 1 bis 4 dadurch gekennzeichnet, daß als Flammschutzmittel 5)
$NH_2$-CO-NH-NH-CO-$NH_2$
verwendet wird.

8. Verfahren gemäß Anspruch 1 bis 4, dadurch gekennzeichnet, daß als Flammschutzmittel 5)

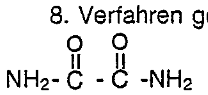

verwendet wird.

9. Verfahren gemäß Anspruch 1 bis 4, dadurch gekennzeichnet, daß als Flammschutzmittel 5)

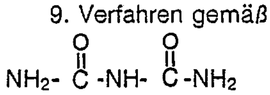

verwendet wird.

10. Verfahren nach Anspruch 1 bis 9, dadurch gekennzeichnet, daß weitere Flammschutzmittel mitver-

wendet werden.